# EUROPEAN PATENT APPLICATION

(11) **EP 3 531 378 A1**
(43) Date of publication of application: **28.08.2019**
(21) Application number: 18305192.9
(22) Date of filing: 23.02.2018
(51) Int. Cl.: G06T 15/04, G06T 15/00

(54) **GRAPHICS PROCESSOR AND METHOD OF IMAGE GENERATION**

(71) Applicant: Ecole Nationale de l'Aviation Civile, 31400 Toulouse Cedex (FR)
(72) Inventor: HURTER, Christophe, 31000 TOULOUSE (FR)
(74) Representative: Bell, Mark

(57) **Abstract**

A graphics processor in which vertex records additionally comprise a texture index, referring to a position in a texture index table. This position is used to store a dynamic characterising value for that vertex. When a render target processes the vertices to render a respective image, it does so in a manner modulated by the corresponding dynamic characterising value retrieved from the texture index buffer in for a preceding iteration of the image generation, while an additional texture index render target retrieve the value from the texture index buffer for each vertex record under consideration and to copy it into the texture index copy buffer for the next iteration. A number of selection mechanisms based on the positioning of containers in the image space are presented, using the dynamic characterising value to register selections and render images accordingly.

## Description

### Field of the invention

The present invention relates generally to interactions with computer generated virtual environments.

### Background of the invention

Over recent years, the ability of computer systems to generate representations of virtual environments which may be presented to a user in such a way that the user perceives the environment as a three-dimensional space in which entities are subject to some extent to rules of perspective, occlusion, and lighting so as to encourage the user to interact or interpret the presented environment to some degree as if it is a real physical space have grown. Such representations are valuable in a number of specialist technical fields such as the interpretation of three dimensional scans from x-ray or tomography sources, industrial applications such as CAD/CAM, and entertainment fields such as cinema and computer gaming.

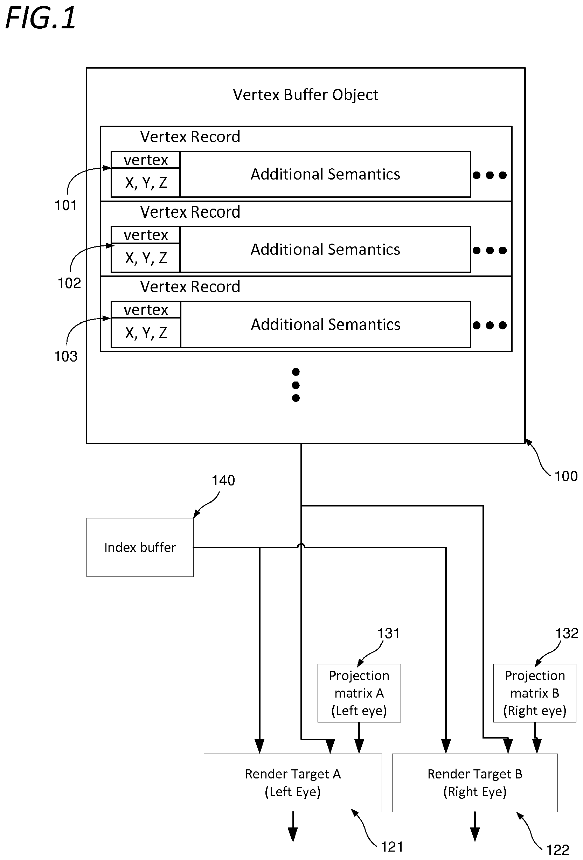

Figure 1 illustrates schematically aspects of the operation of a typical three dimensional (3D) computer graphics card as known in the prior art.

As shown, the graphics card comprises a vertex buffer object 100, an index buffer 140, a first render target module 121 and a corresponding projection matrix 131, and a second render target (Render Target A) module 122 (Render Target B) and a corresponding projection matrix 131, 132. The first projection matrix 131 defines the modulation of vertex data implied by the user's point of view in the three dimensional image as regards the user's left eye. The second projection matrix 132 defines the modulation of vertex data implied by the user's point of view in the three dimensional image as regards the user's right eye. It will be appreciated that while the present description refers to the generation of individual images, it is common to generate and present such images to a user at a rate such that they appear to the user as a continuously moving image, or video. Typically, such images may be displayed at a rate of 60 images per second, for example.

The vertex Buffer Object 100 stores a plurality of vertex records, each vertex record share the same vertex description. The vertex records each define the position of a single vertex in the three dimensional space, associated with respective semantics defining other characteristics associated with that particular vertex such as time, velocity and the like.

The structure of the vertex description is variable depending on the demands of a particular use case, and is defined by means of a shader language such as HLSL (High Level Shading Language), GLSL (OpenGL Shading Language), CG (C for Graphics), and the like through any graphical API (Application Programmable Interface) such as DirectX, OpenGL, OpenCL, OpenAAC, VUKCA, CUDA and the like.

There is further defined an index buffer 140, storing a list of vertices in the case of a point drawing, and/or indications of connections existing between pairs of vertices in the case of a line drawing, or triplets of vertices in the case of a triangle drawing. The index buffer 140 stores indications of the ordered list of existing vertices to be drawn as points. The type of drawing is defined when the graphic card is asked to draw the vertices defined in the Vertex Buffer Object (list of Vertices) with the Index buffer.

In operation, each render target 121, 122 parses the vertex record 101, 102, 103 etc, and plots each vertex defined thereby in a position in the two dimensional display for each eye of the user determined on the basis of the projection matrix for that eye 131, 132 respectively, along with any connections between these vertices as defined by the index buffer, perspective, field of view and the like. This means that when each eye of the user receives the properly plotted information, the position of the vertex is perceived as being situated in a three-dimensional space, subject to perspective, occlusion and the like.

The visual appearance of the drawn points, lines, triangles, visual entities is usually ruled by the last rendering stage of the graphic card with the rasteriser stage (i.e. fragment (OpenGL) or pixel shader (DirectX)). Complex computation can be done by mixing vertex properties to define the visual object opacity (for instance proportional to the time semantic). Other visual properties can be considered like the size of the point, the width of a line, the colour and so on.

While the human brain is usually well adapted to rapidly assimilate visual data, including at an intuitive level which does not require complete processing of all values, available mechanisms for manipulating the data displayed so as to optimise and target this activity are clumsy and slow. It is consequently desirable to provide improved mechanisms for manipulation of vertices for display.

### Summary of the invention

In accordance with the present invention in a first aspect there is provided a graphics processor comprising a vertex buffer adapted to store a plurality of vertex records, each said vertex record defining a vertex in an image space, each said vertex record further comprising a texture index. The graphics processor further comprises a texture index table, one or more render targets corresponding respective user viewpoints, a texture index render target, and a texture index buffer. The one or more render targets correspond to respective user viewpoints and adapted to render a respective image on the basis of said vertices as modulated by a corresponding dynamic characterising value provided by said texture index buffer. The texture index render target is adapted to retrieve a value from said texture index buffer as specified by the texture index of the vertex record under consideration and to copy that value into the texture index copy buffer.

In accordance with the present invention in a second aspect there is provided a method of defining an image with reference to a plurality of vertex records, each said vertex record comprising a set of coordinates for a respective vertex in an image space and a texture index defining a position in a texture index table. The method comprises the steps of reading each vertex record, retrieving the value in the respective position in the texture index table, storing said retrieved value, and rendering the vertex defined by the respective position in a first image in a manner modulated by the value retrieved in the respective position in the texture index table as retrieved in a previous iteration of the step of storing the retrieved value.

In a development of the second aspect, the method comprises the further step of rendering the vertex defined by the respective in a second image in a manner modulated by the value retrieved in the respective position in the texture index table as retrieved in the previous iteration of said steps, so as to obtain a pair of images understandable as a three dimensional image.

In a development of the second aspect, the method comprises the further steps of receiving user input specifying one or more vertices, and setting the value in the texture index table corresponding to each specified vertex as a function of the user input.

In a development of the second aspect, the texture index table is a two-dimensional table, and the texture index comprises a coordinate pair defining a position in the table.

In a development of the second aspect, the method comprises the further step of receiving an input defining a position and orientation in the image space, and wherein the step of rendering the first image comprises rendering an image corresponding to a point of view corresponding to the position and orientation.

In a development of the second aspect, each vertex description comprises a set of coordinates for a respective vertex in an image space and a texture index defining a position of the respective said value in the texture index table the value having a first allowed value or one of a further one or more additional allowed values, and wherein the step of rendering the vertex defined by the respective in a first image in a manner modulated by the value retrieved in the respective position in said texture index table comprises rendering vertices only if they have a value in the texture index table corresponding to said first allowed value.

In a development of the second aspect, the method comprises a further step of, prior to step of reading each vertex record, receiving user input from a first user defining a first container in the image space, the container having a position in the image space corresponding to a position of a first member of the user, wherein any point lying within the container is set to the first allowed value.

In a development of the second aspect, there are defined one or more paths in said image space, each path comprising a plurality of vertices, and wherein for any path, the value in the texture index table corresponding to any vertex belonging to a path comprising a vertex having a first value in the texture index table as specified by the texture index of the vertex record under consideration is also set to the first allowed value.

In a development of the second aspect, the first container changes in position and/or orientation over a period, and wherein the value in the texture index table corresponding to any vertex passing within said container during said period is set to the first allowed value.

In a development of the second aspect, the method comprises a further step of receiving user input defining a second container in the image space, where the value in the texture index table corresponding to any vertex falling within either container is determined on the basis of a Boolean function taking into account whether each said vertex falls within said first container on one hand and whether each said vertex falls within said second container on the other hand.

In a development of the second aspect, the user input defining said first container and the user input defining the second container are received from different respective users.

In a development of the second aspect, the container comprises a cylinder having a proximal end at a position in the volume corresponding to a position of a first member of said user, the axis of said cylinder aligned with an orientation of the first member.

In a development of the second aspect, the method comprises the further step of specifying a filter criterion, where the value in the texture index table corresponding to any vertex is set to the first allowed value only where the vertex also satisfies the filter criterion.

In a development of the second aspect, the method comprises the further steps of receiving a designation of one or more vertices, and setting the value in the texture index table corresponding to the one or more vertices to an allowed value other than the first allowed value.

In a development of the second aspect, the method comprises the further steps of receiving user input defining a movement within the image space, and displacing any vertices having a value in the texture index table corresponding thereto equal to the first allowable value within the image space in accordance with the movement.

In a development of the second aspect, the method comprises the further steps of identifying a group of geometrically similar paths defined by vertices having a value in the texture index table corresponding thereto equal to the first allowable value, defining a representative path, the representative path being representative of the group, and setting the value in the texture index table corresponding to each vertex in each the path of the group to a value other than the first allowable value apart from vertices belonging to the representative path.

In a development of the second aspect, the member is a hand of said user.

In a development of the second aspect, the container is represented graphically in the image space as presented to a user.

In a development of the second aspect, the image space corresponds to a physical volume.

In accordance with the present disclosure in a third aspect, there is provided an apparatus adapted to implement the steps of the second aspect.

In accordance with the present invention in a fourth aspect there is provided a computer program adapted to implement the steps of the second aspect.

### Brief Description of the Drawings

The above and other advantages of the present invention will now be described with reference to the accompanying drawings, for illustration purposes only, in which:
Figure 1 illustrates schematically aspects of the operation of a typical 3D computer graphics card as known in the prior art;
Figure 2 illustrates schematically aspects of the operation of a 3d computer graphics card in accordance with certain embodiments;
Figure 3 shows a method of defining an image with reference to a plurality of vertex records in accordance with an embodiment;
Figure 4 shows a method of setting a dynamic characterization value for a vertex in accordance with an embodiment;
Figure 5 presents an exemplary environment with respect to which certain embodiments are discussed;
Figure 6 shows a variant of the environment of figure 5 illustrating certain selection mechanisms;
Figure 7 shows a variant of the environment of figure 5 illustrating certain further selection mechanisms;
Figure 8 shows a variant of the environment of figure 6; and
Figure 9 shows a generic computing system suitable for incorporating or implementing a graphics processor in accordance with certain embodiments of the invention.

### Detailed description

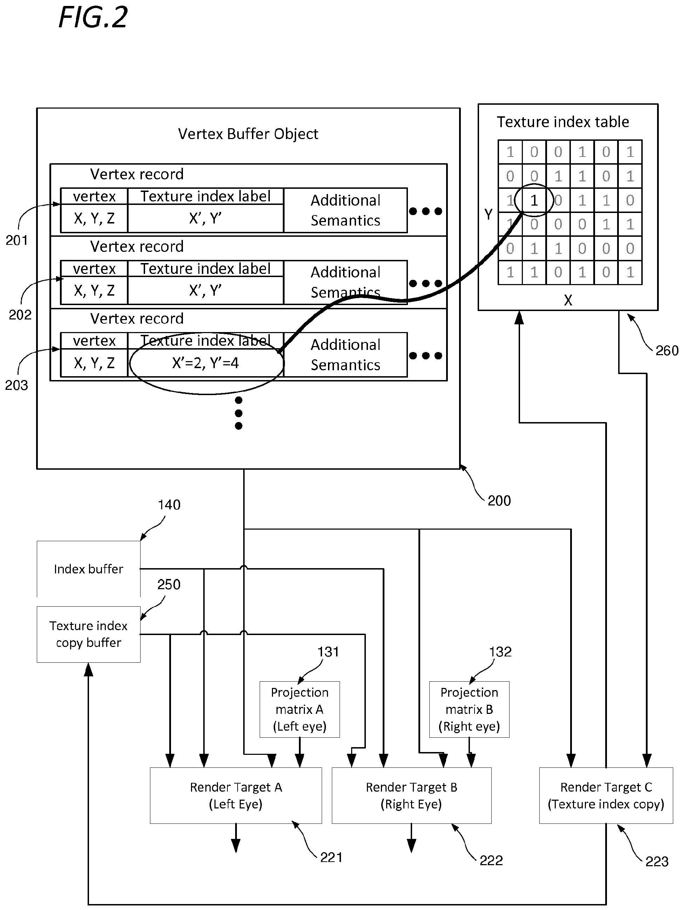

Figure 2 illustrates schematically aspects of the operation of a 3D computer graphics card in accordance with certain embodiments.

As shown, the computer graphics card comprises an index buffer 140, a first render target module 121 and a corresponding projection matrix 131, and projection matrix 133 substantially as described with reference to figure 1.

The 3D computer graphics card further comprises a vertex buffer object 200 storing a plurality of Vertex records 201, 202, 203 with the same specific description, each vertex record containing the position of a single point in the three-dimensional image space, and associated with respective semantics defining other characteristics associated with that particular point such as time and the like, as described above with reference to figure 1. The image space may correspond to a physical space, or not, depending on context.

In particular, each modified Vertex record 201, 202, 203, comprises a respective texture index label, defined by means of the semantics section of the vertex description. Each texture index label comprises a coordinate reference, which due to the choice of a coordinate format can be processed by render targets of the graphics card.

As shown, the graphics card comprises a texture index table 260. This texture index table comprises a two dimensional lookup table such that the coordinate reference in each texture index label corresponds to a respective position in the texture index table, with a unique, one to one mapping between each vertex description and a position in the texture index table.

As shown, the graphics card further comprises an additional render target 223, and a texture index copy buffer 250.

In operation, in accordance with certain embodiments, the value of each position in the texture index table is set to one of a number of predefined possible dynamic characterizing values. The number of possible values that may be assigned to any dynamic characterising value may be any positive number. In some cases, a dynamic characterising value may have one (1) of two (2) possible values. Graphics card index tables as used in this context typically support decimal values, so although the present invention uses one of two possible values, these need not be formally defined as being of Boolean data type. In such cases, and otherwise, one of the possible values, a first allowable value, may be defined as indicating that the corresponding vertex is considered to be "selected for display", and another allowable value may be defined as indicating that the corresponding vertex is considered to be "not selected for display". Increasing the number of possible values may provide additional semantics, for example so as to support multiple selection sources with multiple users, different categories of selection, different types of display, and the like, as discussed in further detail below. While certain embodiments are described generally in the context of the selections on the basis of input from a human user, the skilled person will appreciate that many embodiments are applicable to automatic or semi-automatic selections for example on basic of computer vision, artificial intelligence algorithms, and the like.

In operation, the render targets 221, 222 parse the vertex records 201, 202, 203 etc, and plot each point defined thereby in a position in the two dimensional display for each eye of the user determined on the basis of the projection matrix for that eye 131, 132 respectively, along with any connections between these vertices as defined by the index buffer, subject to rules of visual entity, perspective, lighting, field of view and the like. Additionally, each render target receives information for each vertex from the texture index copy buffer, which contains the data extracted from the texture index table for the vertices processed in the preceding iteration of processing the vertex buffer object into the render target C 223. On this basis, the first and second render targets 221, 222 may process vertices differently, depending on whether their corresponding texture index table entry indicates that the respective vertex is "selected", or "not selected". For example, vertices that are "not selected" may be excluded from display, or displayed in some alternative mode such as with different colouring, intensity, transparency or otherwise, for example as discussed further below.

As implied by the forgoing discussion of the operation of the Texture Index Copy buffer, the third Render Target, the texture index render target 223 is to parse each vertex in parallel with the first and second Render Targets 221, 222, but rather than generating image data, this third Render Target writes Texture index table data at least for the vertices relevant to the constitution of the current image to be displayed to the Texture Copy buffer, so as to be available to the first and second Render Targets 221, 222 in the following iteration of parsing the Vertex Buffer.

As such, there is provided a graphics processor comprising a vertex buffer adapted to store a plurality of vertex records, each vertex record defining a vertex in an image space, each vertex record further comprising a texture index, the graphics processor further comprising a texture index table, one or more render targets corresponding respective user viewpoints, a texture index render target, and a texture index buffer. The one or more render targets corresponding to respective user viewpoints are adapted to render a respective two dimensional image on the basis of the vertices as modulated by a corresponding dynamic characterising value provided by the texture index buffer, and the texture index render target is adapted to retrieve a value from the texture index buffer as specified by the texture index of the vertex record under consideration and to copy the value into the texture index copy buffer.

Accordingly, each vertex description comprises:
a set of coordinates for a respective vertex in an image space and
a texture index defining a position of the value in said texture index table referenced by a respective set of coordinates in one of said vertex descriptions.

In a case where two possible values are allowed in the texture index table, these may have either a first allowed value or a second allowed value. On this basis, the step of rendering the vertex defined by the respective in a first image in a manner modulated by the value retrieved in the respective position in the texture index table may comprise rendering vertices only if they have a value in said texture index table corresponding to the first allowed value, which may be taken to constitute a "selection for display" flag. It may be noted that regardless of the number of values allowed in the texture index table, one may be taken to constitute such a "selection for display" flag.

Embodiments provide an enhanced user experienced based on the improved designation of vertices as selected, or not, as described above. Attempting to provide a mechanism whereby vertices can be tagged as selected or not on the basis of the prior art structure presented above with reference to figure 1 would necessary use multiple rendering stages, first computing the selected items, then displaying them. On the basis of the approach described with reference to figure 2 meanwhile, only one step is advantageously required with the instantiated rendering, where each entity has two locations (one in the screen space as defined by the vertex values, and another in the texture index table). The system only processes once the data to both compute the screen location and determine whether the object is selected. As such implementations retain compatibility with standard graphics card hardware through the use of standard format vertex semantics and an index table to store selection data, whilst offering faster and more efficient processing through a single pass image processing.

While figure 2 presents embodiments in the context of representation of a virtual environment by means of one or more two dimensional images, it will be appreciated that the same approach is applicable in the context of a native 3D display of the image, for example by means of a light field display, holographic projection and the like. It may be borne in mind that the number of dimensions in the display (as implied for example by the number of render targets excluding the texture copy index render target) and the number of dimensions in the index table are not necessarily inherently interconnected, beyond the hardware limitations of certain devices.

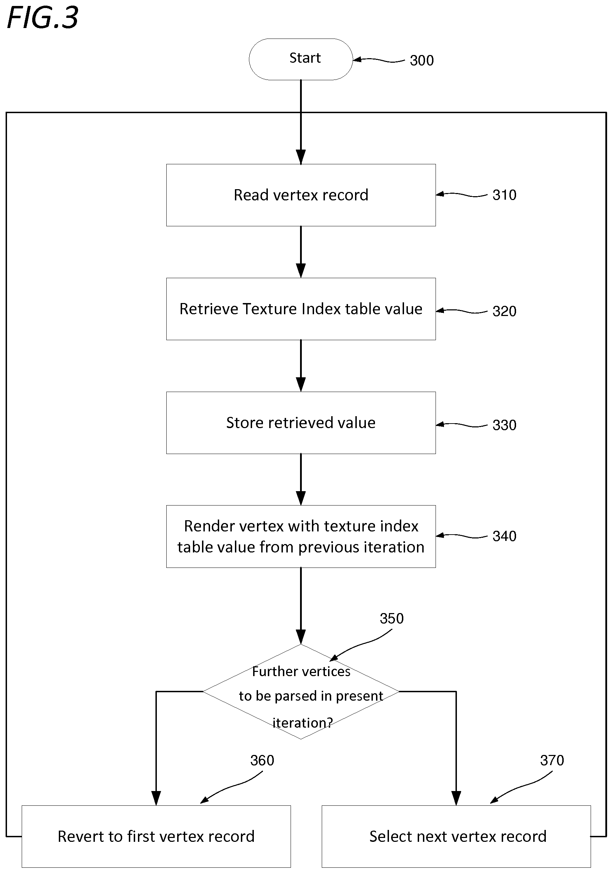

Figure 3 shows a method of defining an image with reference to a plurality of vertex records in accordance with an embodiment.

As shown in figure 3, the method starts at step 300 before proceeding to step 310 at which a vertex record comprising a set of coordinates for a respective vertex in an image space and a texture index defining a position in a texture index table is read. The method next proceeds to step 320 at which the value in the respective position in the texture index table specified by the texture index is retrieved. The method next proceeds to step 330 at which the retrieved value is stored, e.g. in the texture index copy buffer 250 as discussed above. The method then proceeds to step 340 at which the vertex defined by the respective vertex record is rendered in the first image in a manner modulated by the value retrieved from the respective position in the texture index table as retrieved in a previous iteration of the steps. The modulation referred to here will depend on the usage associated with the dynamic characterization value in question. For example, a dynamic characterization value may be defined as a flag indicating whether a particular vertex is to be displayed or not, in which case, the modulation would be either include the vertex in the image, or not.

The method may then proceed to step 350 at which it is determined whether all vertices have been parsed in the present iteration, and if all vertices have been parsed, proceeding to step 360, at which the first vertex record is selected once more and the method reverts to step 310 for the next iteration. Otherwise, if all vertices have not been parsed, the method proceeds to step 370 at which the next vertex record is selected and the method reverts to step 310.

Vertices with a specific flag "user 1 selection" may be displayed with a different colour, line thickness, pattern, or line type, as compared to that associated with the flag "user 2 selection". Flag values may also define a specific line rendering with for instance an animated procession of points, dashes or the like.

It will be appreciated that the number of images rendered at step 340 may be any number from one upwards. In many cases two images may be rendered, corresponding to the views associated with each of a user's eyes. On this basis the method of figure 3 may comprise the further step of rendering the vertex defined by the respective in a second image, in a manner modulated by the value retrieved in the respective position in the texture index table as retrieved in the previous iteration of the steps, so as to obtain a pair of images understandable as a three dimensional image when provided to two respective eyes of a user.

It will be appreciated that the texture index table may be one, two, or n dimensional, and that the texture index of each vertex record will be structured accordingly. As shown in figure 2 by way of example, the texture index table is two dimensional (2D), and the texture index comprises a coordinate pair defining a position in the table. In certain graphical processing systems, the render target may be generally expected to have the same dimension as the texture index table, but this is not necessarily the case for embodiments of the approaches described herein.

It will be appreciated that the operation of the render targets 221 and 222, and the corresponding step 340, implies the choice of a particular view point in the image space, defined for example in terms of an orientation and field of view, in order to compile the image or images to be presented to the or each user. Accordingly, the method of figure 3 may comprise the further step of receiving an input defining a position and orientation in the image space, and the step of rendering the first image may comprise rendering an image corresponding to a point of view corresponding to the position and orientation.

It will be appreciated that the steps of figure 3 need not be executed in the order shown. For example, step 340 may take place before step 330, or the two may overlap or take place simultaneously.

As described with reference to figure 3, each vertex defined by the respective vertex record is rendered in the first image in a manner modulated by the value retrieved from the respective position in the texture index table. In this manner the texture index table may be seen as operating as a hashing table. It may be considered how the dynamic characterization value in the texture index table is set in the first place.

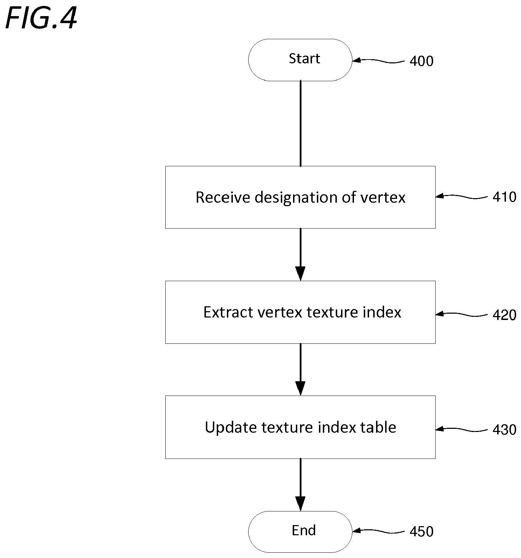

Figure 4 shows a method of setting a dynamic characterization value for a vertex in accordance with an embodiment.

As shown in figure 4, the method starts at step 400 before proceeding to step 410 at which a designation of a vertex is received. This designation may be on the basis of user input for example as discussed in further detail below, or otherwise. The method then proceeds to step 420, at which the vertex record for the vertex question is recovered from the vertex buffer object 200, and the texture index extracted. At step 430, the position in the texture index table indicated in the retrieved vertex record can be updated on the basis of the received input, or otherwise may simply be toggled, or progress through possible values in a defined sequence.

In accordance with the method of figure 4, or otherwise, vertices may be selected according to a variety of mechanisms. In particular, user input may be received designating a particular region or "container" as discussed further below, in the image space, whereby any vertices falling within this container may be deemed to have been designated in the sense of figure 4.

The container may be defined as a set of vertices in the same way as any other object in the image space. The role of these container vertices may be established by defining them in a Container Vertex Buffer Object, independent of the main Vertex Buffer Object 200. The determination of the designation of a vertex may then be made by a Euclidian distance comparison between vertices or a test if vertices fit into the container defined by the Container Vertex Buffer Object on one hand and each of the vertices in the main Vertex Buffer Object 200. As mentioned above, this will typically imply multiple rendering stages, first computing the selected items, storing the results, and then generating images on the basis of the stored selection results together with the complete vertex database for display.

Accordingly, embodiments may additionally comprise the further steps of receiving user input specifying one or more vertices, and setting the value in the texture index table corresponding to each specified vertex as a function of the user input.

In accordance with certain further embodiments, a list of texture indices may be stored recording the time based state of each texture. Images may be generated on the basis of any of these stored states, providing the option of selecting from different display options based on historical states. On this basis the user may be presented an undo/redo type feature, giving access to past selections by navigating between the recorded texture indexes. The user might revert to the selection status as stored for an instant specified by the user, or a specified number of steps in the change of status. In this context the user may highlight particular states for simplified recovery at a later time. Such interactions may be further filtered on the basis of additional voxel semantic data. For example, if a semantic is applied to voxels specifying vehicle type, the user might request the recovery of the selection state at the time an aircraft was last selected.

On the basis of the foregoing discussion, a number of convenient user interactions may be envisaged.

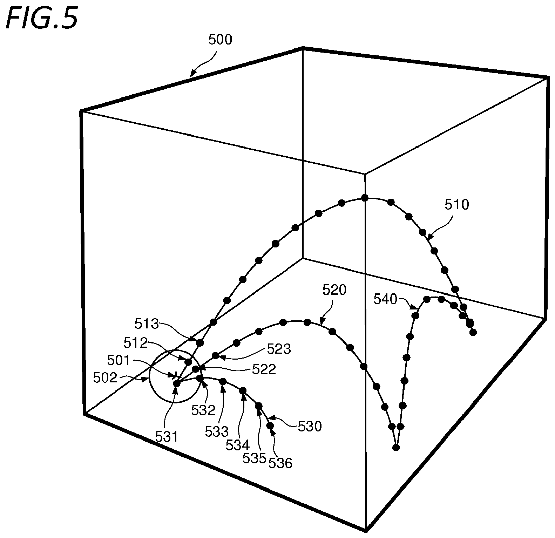

Figure 5 presents an exemplary environment with respect to which certain embodiments are discussed.

As shown, there is provided an image space 500, in which are defined, for illustration and simplification purposes, four paths 510, 520, 530, 540. Each of these paths is defined by a series of vertices. For the sake of simplicity, not all of the shown vertices are numbered, and it will be appreciated that, in real implementations, the number of defined vertices may be much greater. By way of example, the path 530 is defined by vertices 531, 532, 533, 534, 535 and 536. As described above with reference to figures 1, 2, 3 and 4, the path may be defined in terms of the connections between these vertices as represented in the index buffer 140. It will be appreciated that any vertex may be connected to any number of other vertices. For example, the vertex 531 as shown is connected to vertices 512 and 522, as well as 532.

One or more dynamic characterizing values as described with reference to figure 2, 3 or 4 may be set in accordance with certain embodiments.

As shown in figure 5, there is further provided a spherical container 502, which may be seen as being defined by a radius about a centre 501. The position of the centre of this sphere may be defined by user input, as may its radius.

In a virtual environment, many possibilities are provided to define the container and location, orientation, dimensions and/or shape. As an example, the user might orient the container(e.g. by means of a directive tool, which may constitute the representation in the virtual domain of a real world interface device, associated with a member of a user, such as an extended version of a joystick). This provides a 3D location in the virtual environment. The centre of the location defining the position of the container may be defined as the user location plus the vector between the user and the real world interface device multiplied by a distance coefficient. This coefficient may be one (1) when the length of the vector is small, and larger otherwise. As such, when defining the location with the real world interface device, the real world interface device location may closely match the container location when the distance between the user and the wand is small, whilst tending to magnify movement of the location with respect to the notional user position in the virtual environment as the real world interface devices gets progressively further from the users actual physical position. This technique helps to define a container location which is further away than the user's real reach on the basis of a linear scaling between user's input movements in the real world and corresponding directive tool or container movements with respect to a notional user position in the virtual environment. As such, this scaling between measured user movements and movements of the directive tool or container movements may follow any convenient rule, such as a logarithmic, exponential, or any arbitrary continuous or discontinuous function.

This container may be represented graphically in the image space as presented to a user.

As discussed above, any vertices falling within this container may be deemed as having been designated for a dynamic characteristic value update, for example as described with reference to figure 4, for example by setting the dynamic characteristic value to a first allowable value, which as discussed herein may be treated as constituting a "selected for display" flag.

As such, there may be provided a further step, prior to the step of reading each vertex record, of receiving user input from a first user defining a first container in the image space. The container may have a position in the image space corresponding to a position of a first member of the user, wherein any point lying within the container is set to the first allowed value.

This process may operate as follows: a selector vertex buffer object is defined containing a vertex corresponding to the centre 501 of the spherical container 502. Each vertex in the image space 500 is then processed to compute its position in corresponding to the centre 501. The same process operates for the selector vertex object. Then a comparison function is applied to determine if the current vertex falls within the container.

On this basis, as shown, the vertices 531, 522 and 512 may be taken to have been designated.

It will be appreciated that while the container described with respect to figure 5 takes the form of a sphere, the container may take any convenient form such as the form of any regular or irregular geometric solid, or any arbitrarily defined solid, or combination of solids. For example, the container may comprise a tetrahedron, cube, octahedron, dodecahedron, icosahedron, pyramid, prism, cone, cylinder or any solid of rotation, extruded convex or non convex polygon.

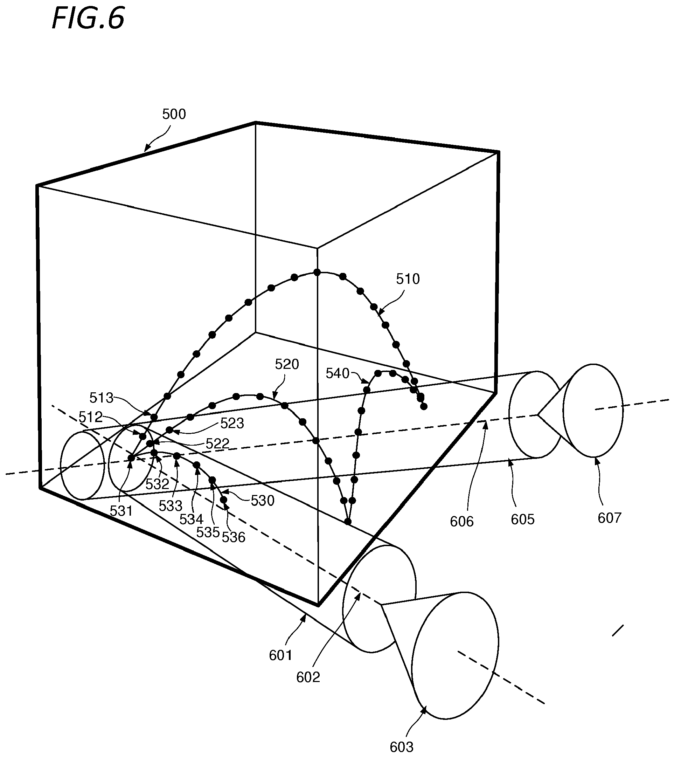

Figure 6 shows a variant of the environment of figure 5, illustrating in particular certain selection mechanisms.

While figure 5 shows the designation of vertices by means of a single container, in other embodiments selection may be performed on the basis of a combination or intersection of two or more containers, as it should easily be appreciated the skilled person.

The environment of figure 6 corresponds to that of figure 5, however instead of the spherical container 502, there is provided a first cylindrical container 601, which may be seen as being defined by an axis 602, with a periphery at a defined radius. The orientation of the axis may be defined by a user input. As shown, the cone 603 represents a directive tool which may be manipulated by the user to define the orientation of the axis 603 of the first cylinder. Furthermore, as shown in figure 6, there is provided a second cylindrical container 605, which may be seen as being defined by an axis 606, with a periphery at a defined radius. The orientation of the axis may be defined by a user input. As shown, the cone 607 represents a second directive tool which may be manipulated by the user to define the orientation of the axis 603 of the first cylinder.

As such, the container may comprise a cylinder having a proximal end at a position in the image space corresponding to a position of a first member of a user, the axis of the cylinder being aligned with an orientation of the first member. This member may be the users hand, or any other member as convenient. In a case where two containers are used as shown in figure 6, these may be positioned on the basis of the movements of a second member, which may be the user's other hand or any other convenient member.

In certain virtual environments, parts of a user's body may be represented in the virtual environment, which may then be used as a means for interaction with elements of the environment. On this basis, the codes 603, 607 might be taken to represent the member, e.g. hands of the user. On this basis there may be provided a further step of receiving user input defining a first container in the image space, the container having a position in the image space corresponding to a position of a first member of the user, wherein any vertex lying within the container is assigned a status as having been selected.

As such the container may comprise a cylinder having a proximal end at a position in the volume corresponding to a position of a first member of the user, the axis of the cylinder aligned with an orientation of the first member.

The user input defining the first container and the user input defining the second container may be received from different respective users. Indeed, it will be appreciated that any number of users may interact with the image space with any number of containers, and that images of the image space may be presented to any further set of users.

In accordance with certain embodiments, any vertex found in either the first cylinder 601 or the second cylinder 605 may be considered to be designated.

Alternatively, only vertices found in both cylinders may be taken to be designated. This approach permits an optimised and fine manipulation by the user of the envelope defined by the containers together which determines which vertices are taken to be designated.

In a further variant, selections may be made as described above, and then the operating mode of one or both containers changed to a "de-selection" mode, offering the opportunity for the user to refine his selection by removing some or all selected items.

The cylinders of figure 6 may be seen, and optionally presented to a user, as beams projected from the directive tools 603, 607. The image presented to the user in support of the selection process may conveniently by modified to simulate an illumination effect, such that vertices within the container are visually highlighted.

Still further, any Boolean function may be adopted to define the basis on which vertices falling within one container or the other, or both, may be taken to be designated.

Furthermore, a user may select a vertex or set of vertices, for example belonging to a path, in any of the manners described herein or otherwise, and then define a movement within the image space, whereby any vertices having a value in the texture index table corresponding thereto equal to the first allowable value within the image space in accordance with the movement. This might provide a mechanism for example of selecting a path and dragging it to a new position in the image space. This may provide a convenient mechanism for comparing paths side by side, or simply of moving a path to one side so as to establish a clear view of other elements in the image space, to put elements to one side for later consideration, and so on.

While figure 6 presents a combination of two containers, it will be appreciated that any number of containers may be used.

Furthermore, it will be appreciated that regardless of the number of containers used, they may be of different forms, from one to the next, or be grouped into a number of different types.

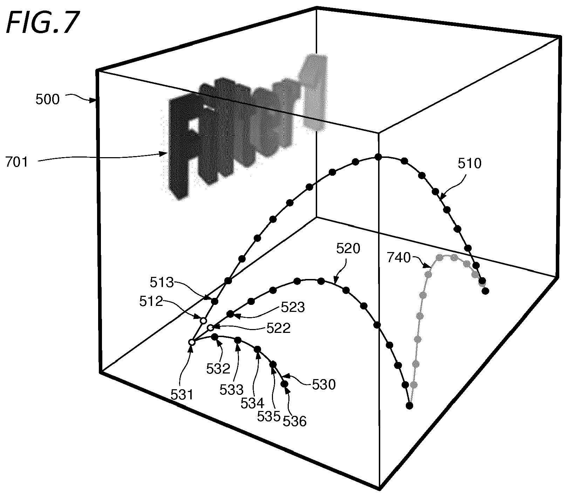

While figures 5 and 6 discuss the determination as to the designation of vertices purely on the basis of whether or not they fall within the respective container or containers, in accordance with certain embodiments a variety of additional factors may be taken into consideration, for example as described with reference to figure 7 below.

Figure 7 shows a variant of the environment of figure 5 illustrating certain further selection mechanisms.

In certain cases, the system may extend the vertices considered to have been designated to all vertices connected to a vertex designated by means of a container for example as discussed with reference to figure 5 or 6. On this basis, as shown, if the vertices 531, 522 and 512 are designated by means of a container, as shown in figure 5, the vertices of paths 510, 520 and 530 may also be considered to have been designated. On this basis, while paths 510, 520 and 530 are shown in black, indicating that they will be displayed in images for example as generated by the Render targets 221 or 222 of figure 2 in a first mode, the remaining path 740, corresponding to path 540 in figures 5 and 6 is shown in grey, indicating that the vertices composing this path will be displayed in a second mode, which may mean not being displayed at all.

Accordingly, there may be defined one or more paths in the image space, each path comprising a plurality of vertices, wherein for any path, the value in the texture index table corresponding to any vertex belonging to a the path comprising a vertex having a first value in the texture index table as specified by the texture index of the vertex record under consideration is also set to the first allowed value.

As well as or instead of designation procedures as described in the foregoing paragraph, in certain embodiments, additional selection filters may be defined. These may operate on any characteristic of a vertex, including time, velocity, acceleration, colour, direction, range of vertex semantic values, list of vertex semantic values, or any other value as may be defined in the vertex record or elsewhere which may conveniently discriminate between vertices. For example, where a vehicle type semantic is defined for vertices, a list of values might comprise "fixed wing aircraft", "helicopters" and the like. Similarly, where a vehicle age semantic is defined for vertices, a range of values might comprise a range of vehicles of between 5 and 10 years old, range of sizes, range of velocity, range of models, and so on.

As such, there may be provided a further step of specifying a filter criterion, where the value in the texture index table corresponding to any vertex is set to the first allowed value only where the vertex also satisfies the filter criterion.

Furthermore, a user may select a vertex or set of vertices, for example belonging to a path, in any of the manners described herein or otherwise, in order to set the value in the texture index table corresponding to any vertex to a value other than first allowed value. In a case where the first allowable value is considered to constitute a "selected for display" flag, specifically setting particular vertices to another value in this way may constitute manually excluding certain elements from display. This operation may be activated in any convenient manner, including the various mechanisms described herein with regard to the activation of filters.

One mechanism for applying such filters may comprise associating a control region in the image space with a filter, so that a user may activate or deactivate the filter without leaving the virtual environment. As shown in figure 7, there is provided a region 701 in the image space 500, which in an embodiment may be associated with a filter, whereby a user may designate the region in the virtual environment by any convenient mechanism as may be defined in that environment, including the use of a container as discussed with reference to figures 5 and 6. When designated in this manner, the vertices as designated and displayed in the image may be modulated for display by whatever means may be associated with the region. For example, vertices not satisfying a particular criterion associated with the region may be excluded from display. This criterion may be a value defined in the vertex records of the vertices under consideration (e.g. display only vertices having a certain speed), or may be determined with reference to a database or other data source relating to each vertex under consideration (e.g. display only vertices associated with a particular vehicle type).

It may be noted that any number of such regions may be provided in the virtual environment. It will be appreciated that as well as a simple switching operation as described with respect to figure 7 where the filter is either applied, or not, any convenient interface type may be considered, including for example sliders or knobs allowing the definition by the user of a filter strength or threshold, etc.

It will be appreciated that filters may be operated from outside the virtual environment, by any suitable means. For example, through a traditional two dimension mouse based interface, touchscreen, keyboard hot keys, and so on.

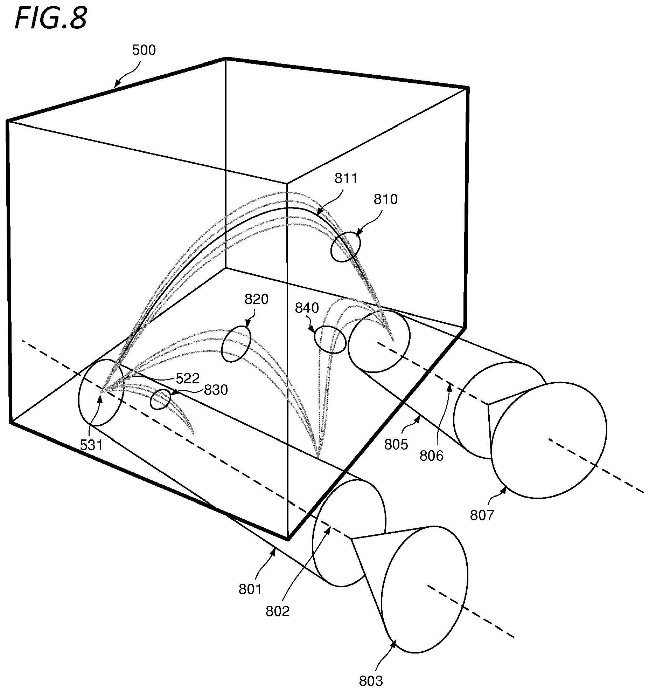

Figure 8 shows a variant of the environment of figure 6.

As discussed with respect to figure 6, in certain embodiments selection may be performed on the basis of a combination or intersection of two or more containers.

The environment of figure 8 corresponds to that of figure 6, in which there is provided a first cylindrical container 801, which may be seen as being defined by an axis 802, with a periphery at a defined radius. The orientation of the axis may be defined by a user input. As shown, the cone 803 represents a directive tool which may be manipulated by the user to define the orientation of the axis 803 of the first cylinder. Furthermore as shown in figure 8 there is provided a second cylindrical container 805, which may be seen as being defined by an axis 806, with a periphery at a defined radius. The orientation of the axis may be defined by a user input. As shown, the cone 807 represents a second directive tool which may be manipulated by the user to define the orientation of the axis 803 of the first cylinder. As shown, instead of single paths 510, 520, 530 540 as described above, figure 8 shown bundles of multiple paths 810, 820, 830, 840. This scenario may typically arise for example in displaying aircraft flight paths for example, with the meeting points of the respective bundles corresponding to airports.

As discussed with respect to figure 6, In accordance with certain embodiments, any vertex found in either the first cylinder 801 or the second cylinder 805 may be considered to be designated.

Alternatively, only vertices found in both cylinders may be taken to be designated. This approach permits a fine manipulation by the user of the envelope defined by the containers together which determines which vertices are taken to be designated.

Still further, as an extension of the path-wise approach introduced with reference to figure 7, any path comprising a vertex designated by the first container and a vertex designated by the second container may be taken to have been designated, with respect to every vertex in that path.

Since for any vertex the number of connections to further vertices can be readily obtained from the index buffer, e.g. 140 as described above, it is consequently quite simple to determine whether a designated vertex corresponds to the end of the path, and on this basis consider an path starting g with a vertex designated by the first container and ending with a vertex designated by the second container (or vice versa) may be taken to have been designated, with respect to every vertex in that path.

The application of these approaches may be activated by a user by means of any of the mechanisms described with respect to filters in the discussion of figure 7 above, or otherwise.

These approaches are of course equally usable in the case of a single container.

As shown in figure 8, the paths may comprise multiple similar paths. Notwithstanding the selection mechanisms described above, this may still lead to a cluttered image, making interpretation by a user difficult. In certain embodiments, there may be provided an additional step of selecting or defining a reduced number of paths representative of a group of similar paths. On this basis, vertices belonging to paths in a selected bundle but not selected or defined as representative may have a dynamic characteristic value set as described above, whereby the representation of these paths may be modulated as described above, for example by being excluded from the image, or displayed in a less visible manner. On this basis as shown while the group of paths 810 is selected, on the basis that each of the paths in this group has at least one vertex falling within each container 805, 806, only the path 811 is shown as a black line, indicating that this path is fully displayed in the image presented to the user, while the remaining paths in the bundle 810 are grey, indicating that their display is modulated as discussed above, for example by not being displayed, or being displayed less visibly (or more transparently). Known bundling techniques may be used as a basis of selecting or defining a representative path from a group of related paths, for example based on a function decomposition principle or other visual simplification methods, such as averaging of curves, edge bundling algorithms and the like. According to one possible technique, each path in the set of paths is expanded on piece-wise polynomial basis, and a respective centroid function and sequence of eigenfunctions calculated for each expanded representation. A set of principle paths representing the major variation of this set of paths is obtained describing the variations of the set of realistic paths with respect to the centroid. The resulting path model thus comprises a linear combination of the principle paths.

As such, the method may comprise the further step of identifying a group of geometrically similar paths defined by vertices having a value in the texture index table corresponding thereto equal to the first allowable value, defining a representative path representative of the group, and setting the value in the texture index table corresponding to each vertex in each the path of the group to a value other than the first allowable value apart from vertices belonging to the representative path.

The designation approaches of figures 5, 6 and 7 have been described generally in static terms, however it will be appreciated that it is common for virtual environments to exist equally in a time dimension, so that user input may be received as a continuous or sequential input. In this context, while designations may be performed by taking a snapshot of the vertices falling within a container etc. as discussed above at a particular instant, designations might also be performed during a particular time window, for example such that as the container changes in position and/or orientation over a period, the value in the texture index table corresponding to any vertex passing within the container during the period may be set to the first allowed value.

The skilled person will appreciate that the various concepts described with respect to figures 2, 3, 4, 5, 6, 7 and 8 may be freely combined. For example, the multiple containers of figure 6 may be extended to the different container shapes described with respect to figure 5, the different filter effects and selection logics described with respect to figures 7 or 8 may be mixed in any combination, and combined with the different container shapes or manipulation techniques of the earlier figures, the bundling and unbundling described with respect to figure 8 may be combined with the approaches of any of the other figures, and so on.

Accordingly, there is provided a graphics processor in which vertex records additionally comprise a texture index, referring to a position in a texture index table. This position is used to store a dynamic characterising value for that vertex. When a render target processes the vertices to render a respective image, it does so in a manner modulated by the corresponding dynamic characterising value retrieved from the texture index buffer in for a preceding iteration of the image generation, while an additional texture index render target retrieve the value from the texture index buffer for each vertex record under consideration and to copy it into the texture index copy buffer for the next iteration. A number of selection mechanisms based on the positioning of containers in the image space are presented, using the dynamic characterising value to register selections and render images accordingly.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figures 1 to 8. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices, head mounted displays with or without see through technology, glasses or any device allowing the display of lines or the like.

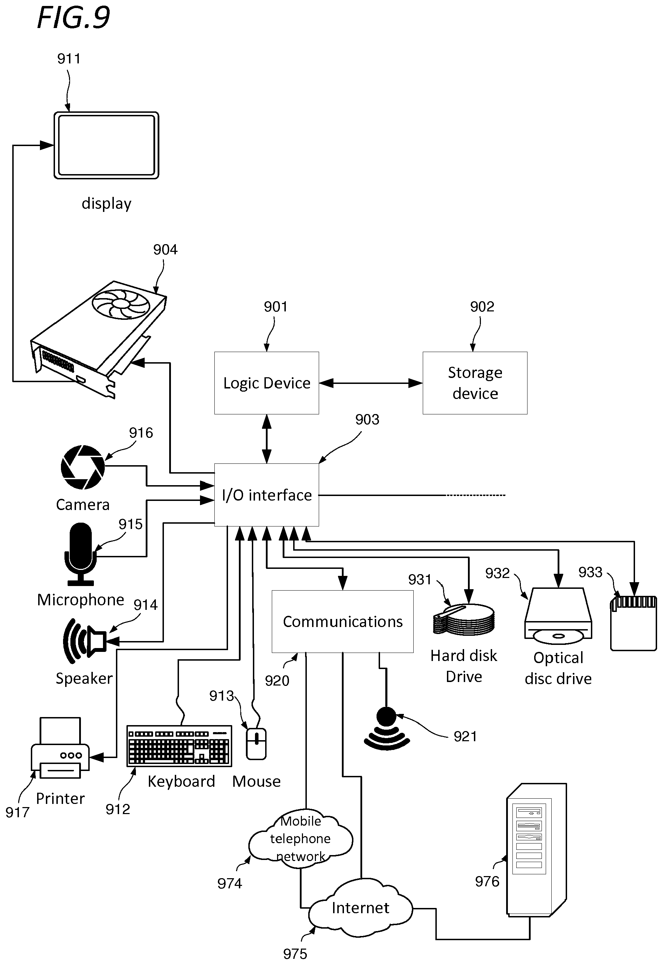

Figure 9 shows a generic computing system suitable for incorporating or implementing a graphics processor in accordance with certain embodiments of the invention.

A shown in figure 9, a system includes a logic device 901 and a storage device 902. The system may include a graphics processor 904. The graphics processor may be adapted as described above with respect to figures 2 to 8. The graphics processor may provide image data to a display subsystem 911, which may comprise a display capable of 3D graphics display for example by means of anaglyph, polarised, parallax barrier, active shutter or any other convenient technology, or may also comprise 2D or 3D goggles, possibly provided with separate displays for each eye. Input/output subsystem 903, communication subsystem 920, and/or other components not shown.

Logic device 901 includes one or more physical devices configured to execute instructions. For example, the logic device 901 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 901 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 901 optionally may be distributed among two or more separate devices, which may be remotely located and/or configured for coordinated processing. Aspects of the logic device 901 may be virtualized and executed by remotely accessible, networked computing devices configured in a cloud-computing configuration.

Storage device 902 includes one or more physical devices configured to hold instructions executable by the logic device to implement the methods and processes described herein. When such methods and processes are implemented, the state of storage 902 device may be transformed-e.g., to hold different data.

Storage device 902 may include removable and/or built-in devices. Storage device may be locally or remotely stored (in a cloud for instance). Storage device 902 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 903 adapted to support communications between the logic device 901 and further system components. For example, additional system components may comprise removable and/or built-in extended storage devices. Extended storage devices may comprise one or more types of storage device including optical memory 932 (e.g., CD, DVD, HD-DVD, Blu-Ray Disc, etc.), semiconductor memory 933 (e.g., RAM, EPROM, EEPROM, FLASH etc.), and/or magnetic memory 931 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 901 and storage device 902 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device 902. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 9 may be used to implement embodiments of the invention.

Some or all of the functions of the above embodiments may be implemented in the graphics processor 904. Some or all of the functions of the above embodiments may be implemented by the way of suitable instructions stored in storage device 902 and executed by logic device 901. Information reflecting or defining the image space, any physical space, and in particular the vertex Buffer object 200, the index buffer 140, the texture index copy buffer 250 or texture index table 260, and so on may be stored in storage device 902, 931, 932, 933. Information reflecting or defining the image space may be stored received via the communications interface 920. User input defining positioning the containers may be received via the I/O interface 903 and in particular, camera 916, mouse 913, keyboard 912 or otherwise. The functions of any or all of the render targets 221, 222 and 223 may similarly be implemented by a program performing the required functions, in communication with additional dedicated hardware units as necessary. The display 911 may display the graphical representation of the image space. Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, display subsystem 911 may be used to present a visual representation of data held by a storage device. This visual representation may take the form of a graphical user interface (GUI), in particular presenting a 2D or 3D representation of the image space as discussed above, taking into account any display variations associated with the selection status of each vertex. The GUI may additionally or alternatively present one or more containers as described above, and/or one or more directive tools. The GUI may additionally or alternatively present interface features for the activation/deactivation of selection filters as described above, and any other interface feature as may be convenient for implementations of embodiments. As the herein described methods and processes change the data held by the storage device 902, and thus transform the state of the storage device 902, the state of display subsystem 911 may likewise be transformed to visually represent changes in the underlying data. Display subsystem 911 may include one or more display devices utilizing virtually any type of technology for example as discussed above. Such display devices may be combined with logic device and/or storage device in a shared enclosure, or such display devices may be peripheral display devices. An audio output such as speaker 914 may also be provided.

When included, input subsystem may comprise or interface with one or more user-input devices such as a keyboard 912, mouse 913, touch screen 911, or game controller (not shown). In some embodiments, the input subsystem may comprise or interface with selected natural user input (NUI) componentry, in particular the positioning of containers and the selection of filters as discussed above. Such componentry may be integrated or peripheral, and the transduction and/or processing of input actions may be handled on- or off-board. Example NUI componentry may include a microphone 915 for speech and/or voice recognition; an infrared, colour, stereoscopic, and/or depth camera 916 for machine vision and/or gesture recognition; a head tracker, eye tracker, accelerometer, and/or gyroscope for motion detection and/or intent recognition; as well as electric-field sensing componentry for assessing brain activity. Any or all of these means may be used to determine a users view point e.g. as defined by the Projection Matrices 131, 132, and also in the definition of the position and or orientation of the container or containers. In particular, as described above, the position and/or orientation of the or each container may be defined with reference to the position and or orientation of a user's member, such as a user's hand, which may conveniently by determined by the means mentioned above. The input/output interface 903 may similarly interface with a loudspeaker 914, vibromotor or any other transducer device as may occur to the skilled person. For example, the system may interface with a printer 917.

When included, communication subsystem 920 may be configured to communicatively couple computing system with one or more other computing devices. For example, communication module of communicatively couple computing device to remote service hosted for example on a remote server9 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 974, or a wired or wireless local- or wide-area network. In some embodiments, the communication subsystem may allow computing system to send and/or receive messages to and/or from other devices via a network such as Internet 975. The communications subsystem may additionally support short range inductive communications with passive or active devices (NFC, RFID, UHF, etc). In certain variants of the embodiments described above, the traffic data may be received via the telephone network 974 or Internet 975.

The system of figure 9 is intended to reflect a broad range of different types of information handling system. It will be appreciated that many of the subsystems and features described with respect to figure 9 are not required for implementation of the invention, but are included to reflect possible systems in accordance with the present invention. It will be appreciated that system architectures vary widely, and the relationship between the different sub-systems of figure 9 is merely schematic, and is likely to vary in terms of layout and the distribution of roles in systems. It will be appreciated that, in practice, systems are likely to incorporate different subsets of the various features and subsystems described with respect to figure 9.

Examples of devices comprising at least some elements of the system described with reference to figure 9 and suitable for implementing embodiments of the invention include cellular telephone handsets including smart phones, and vehicle navigation systems.

Further embodiments may be based on or include immersive environment devices such as the HTC vive, Oculus rift etc, or other hybrid device such as the Hololens Meta vision 2, connected glasses.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A graphics processor comprising a vertex buffer adapted to store a plurality of vertex records, each vertex record defining a vertex in an image space, each vertex record further comprising a texture index, said graphics processor further comprising a texture index table, one or more render targets corresponding to respective user viewpoints, a texture index render target, and a texture index buffer, wherein said one or more render targets corresponding to respective user viewpoints are adapted to render a respective image on the basis of said vertices as modulated by a corresponding dynamic characterising value provided by said texture index buffer, and said texture index render target is adapted to retrieve a value from said texture index buffer as specified by the texture index of the vertex record under consideration and to copy said value into said texture index copy buffer.

2. A method of defining an image with reference to a plurality of vertex records, each said vertex record comprising a set of coordinates for a respective vertex in an image space and a texture index defining a position in a texture index table, said method comprising the steps of:
reading each said vertex record,
retrieving the value in the respective position in said texture index table,
storing said retrieved value, and
rendering the vertex defined by the respective position in a first image in a manner modulated by the value retrieved in the respective position in said texture index table as retrieved in a previous iteration of said step of storing said retrieved value.

3. The method of claim 2 comprising the further step of rendering the vertex defined by the respective in a second image in a manner modulated by the value retrieved in the respective position in said texture index table as retrieved in said previous iteration of said steps, so as to obtain a pair of images understandable as a three dimensional image.

4. The method of claim 2 or 3, comprising the further steps of receiving user input specifying one or more said vertices, and setting the value in the texture index table corresponding to each said specified vertex as a function of said user input.

5. The method of any of claims 2 to 4, wherein said texture index table is a two-dimensional table, and said texture index comprises a coordinate pair defining a position in said table.

6. The method of any of claims 2 to 5 comprising the further step of receiving an input defining a position and orientation in said image space, and wherein said step of rendering said first image comprises rendering an image corresponding to a point of view corresponding to said position and orientation.

7. The method of any of claims 2 to 5 wherein each said vertex description comprises a set of coordinates for a respective vertex in an image space and a texture index defining a position of the respective said value in said texture index table, said value having a first allowed value or one of a further one or more additional allowed values, and wherein said step of rendering the vertex defined by the respective in a first image in a manner modulated by the value retrieved in the respective position in said texture index table comprises rendering vertices only if they have a value in said texture index table corresponding to said first allowed value.

8. The method of any of claims 2 to 7 comprising a further step of, prior to said step of reading each said vertex record, receiving user input from a first user defining a first container in said image space, said container having a position in said image space corresponding to a position of a first member of said user, wherein any said vertex lying within said container is set to said first allowed value.

9. The method of claim 8 wherein there are defined one or more paths in said image space, each said path comprising a plurality of vertices, and wherein for any said path, the value in said texture index table corresponding to any vertex belonging to a said path comprising a said vertex having a first value in said texture index table as specified by the texture index of the vertex record under consideration is also set to said first allowed value.

10. The method of any of claims 8 to 9 wherein said first container changes in position and/or orientation over a period, and wherein the value in said texture index table corresponding to any vertex passing within said container during said period is set to said first allowed value.

11. The method of any of claims 8 to 10 comprising a further step of receiving user input defining a second container in said image space, where the value in said texture index table corresponding to any vertex falling within either said container is determined on the basis of a Boolean function taking into account whether each said vertex falls within said first container on one hand and whether each said vertex falls within said second container on the other hand.

12. The method of any of claims 8 to 11 wherein said container is represented graphically in said image space as presented to a user.

13. The method of any of claims 8 to 12 wherein said image space corresponds to a physical volume.

14. An apparatus adapted to implement the steps of any of claims 2 to 13.

15. A computer program adapted to implement the steps of any of claims 2 to 13.
